# EUROPEAN PATENT APPLICATION

(11) **EP 1 296 490 A2**
(43) Date of publication of application: **26.03.2003**
(21) Application number: 02078303.1
(22) Date of filing: 08.08.2002
(51) Int. Cl.: H04L 12/58

(54) **Message broker**

(30) Priority: 14.08.2001 EP 01410102
(71) Applicant: Hewlett-Packard Company, Palo Alto, CA 94304 (US)
(72) Inventor: Picca, Andre, 38610 Gieres (FR); Lechner, Stephane, 74140 Chens-Sur-Leman (FR); Eckert, Philippe, 1004 Lausanne (CH)
(74) Representative: Lloyd, Richard Graham

(57) **Abstract**

A message broker for transmitting message from a first client system to a second client system, the message broker comprising at least one message channel, a first channel adapter and a second channel adapter, the first channel adapter being operable to; receive a message from the first client system encoded in an Internet protocol and comprising content information and destination information, read the destination information from the message, and send a push request to place the message in a message channel corresponding to the destination information, the second channel adapter being operable to; receive a message request from the second client system encoded in an Internet protocol and comprising source information, read the message request and identify a message channel corresponding to the source information, send a pull request to the identified channel, and generate a response accordingly.

## Description

### Field of the Invention

This invention relates to a message broker, a transmission module and a receiver module, a client system when provided with a transmission module and a receiver module, a communication system comprising a message broker and at least one client system, and a method of transmitting a message.

### Background of the Invention

The spread and development of the Internet has allowed the development of a number of different methods of communication. Such methods include e-mail, a store-and-forward system of transmitting messages, forums where users are able to post messages for public consumption and where replies can be posted, and text-based communication systems such as "chat rooms". Such applications are however not particularly suitable for real-time communication across the Internet. Further, where a computer system accesses the Internet through a firewall of conventional type, it is often the case that the firewall is permitted to allow only a very limited set of message types to pass between the computer system and the Internet, further limiting the potential use of the Internet for real time communications.

An aim of the invention is to provide a new or improved message broker for transmitting messages over the Internet.

### Summary of the Invention

According to a first aspect of the invention we provide a message broker for transmitting messages from a first client system to a second client system, the message broker comprising at least one message channel, a first channel adapter and a second channel adapter,
the first channel adapter being operable to;
receive a message from the first client system encoded in an Internet protocol and comprising content information and destination information,
read the destination information from the message, and send a push request to place the message in a message channel corresponding to the destination information,
the second channel adapter being operable to;
receive a message request from the second client system encoded in an Internet protocol and comprising source information,
read the message request and identify a message channel corresponding to the source information,
send a pull request to the message channel, and
generate a response accordingly.

The second channel adapter may be operable to generate a response comprising a time out response if no message is placed in the channel within a predetermined time period.

When a message is placed in the channel, the second channel adapter may be operable to generate a response comprising at least the content information.

The second channel adapter module may be operable to generate a response encoded in an Internet protocol format.

The first channel adapter and the second channel adapter may be implemented by a servlet.

The message broker may comprise an address information store wherein channel information corresponding to at least one of the destination information and source information is stored.

The message broker may comprise a bi-directional communication link, the message broker comprising two message channels, each channel comprising a first channel adapter and a second channel adapter, such that the message broker is operable to transmit messages from the first client system to the second client system using one of the channels and from the second client to the first client using the other of the channels.

The first channel adapter of one of the channels and the second channel adapter of the other of the channels may be provided by a common combined channel adapter module.

The message and the response may be encoded in HTTP format.

The message may comprise a HTTP POST request.

The message request may comprise a HTTP GET request.

According to a second aspect of the invention, we provide a transmission module operable to transmit a message from a first client system to a message broker for receipt by a second client system, the transmission module being operable to
receive message information comprising content information and destination information corresponding to a message channel.
generate a message comprising the message information encoded in an Internet protocol format, and
transmit the message to a message broker for retrieval by the second client system from the message channel.

The message may be encoded in HTTP format and transmitted to the message broker using a HTTP POST request.

According to a third aspect of the present invention, we provide a client system provided with a transmission module according to the second aspect of the invention and a firewall, wherein the message is permitted to pass the firewall.

According to a fourth aspect of the invention we provide a receiver module for a second client system operable to retrieve a message comprising content information from a message broker sent by a first client system, the receiver module being operable to;
receive a message request comprising source information corresponding to a message channel,
generate a message request encoded in an Internet protocol format in accordance with the source information,
transmit the message request to the message broker,
receive a response from said message broker in accordance with the message request, and
generate an output.

Where the response comprises a time-out response, the receiver module may be operable to generate an output comprising re-transmitting the message request to the message broker.

Where the response comprises a message, the receiver module is operable to generate an output comprising the message content information.

According to a fifth aspect of the invention we provide a client system comprising a receiver module according to a fourth aspect of the invention and a firewall, wherein the message request and the response are permitted to pass the firewall.

The message request and response may be encoded using HTTP format and the message request may comprise an HTTP GET request.

According to a sixth aspect of the present invention, we provide a communication system comprising a message broker and at least one of a client system according to the third aspect of the invention and a client system according to the fourth aspect of the invention.

The message broker and the at least one client system are preferably connected via the Internet.

According to a seventh aspect of the present invention, we provide a method of transmitting messages from a first client system to a second client system comprising the steps of receiving a message encoded in Internet protocol format from the first client system and comprising content information and destination information corresponding to a message channel, reading the destination information, sending a push request to place the content information in the message channel corresponding to the destination information, receiving a message request from the second client system encoded in an Internet protocol format and comprising source information corresponding to the message channel, reading the message request to identify the message channel corresponding to the source information, sending a pull request to the message channel, and generating a response accordingly.

According to a seventh aspect of the present invention, we provide a method of transmitting a message from a first client system to a message broker for retrieval by a second client system comprising the steps of;
receiving message information comprising destination information corresponding to a message channel and content information,
generating a message comprising the content information and destination information encoded in an Internet protocol format, and
transmitting said message to a message broker.

According to an eighth aspect of the present invention, we provide a method of monitoring a message broker for a received message for a second client system from a first client system comprising the steps of;
receiving a request comprising source information corresponding to a message channel,
generating a message request encoded in an Internet protocol format in accordance with the source information,
transmitting said message request to the message broker via an Internet link
receiving a response from the message broker in accordance with the request, and
generating an output in accordance with the response.

The present invention thus permits the establishment of an almost real-time communication link through firewalls across the Internet, in a purely software-implemented manner without requiring additional hardware.

### Brief Description of the Drawings

The invention will now be described by way of example only with reference to the accompanying drawings wherein;
Figure 1 is a diagrammatic illustration of an Internet communication system comprising a message broker embodying the invention,
Figure 2 is a diagram of the operation of the system of Figure 1,
Figure 3 is an illustration of an Internet communication system comprising a further message broker embodying the present invention,
Figure 4 is a diagrammatic illustration of an Internet communication system, and
Figure 5 is a diagrammatic illustration of a further Internet communication system

### Description of the Preferred Embodiments

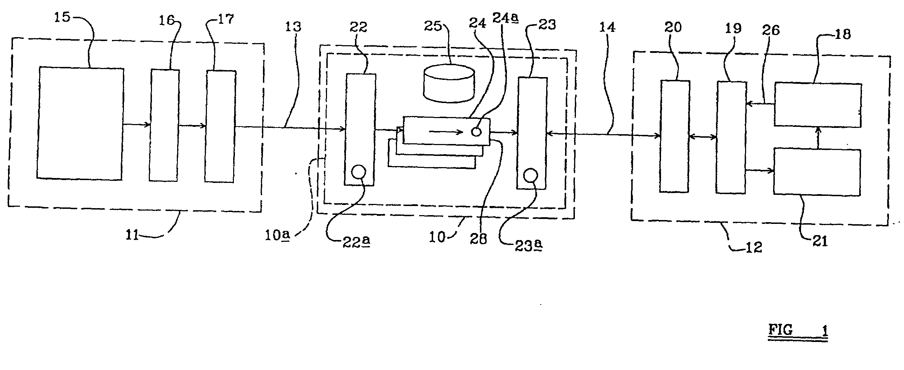

Referring now to Figure 1, a message broker embodying the present invention is generally indicated at 10 operable to pass messages between a first client system 11 and a second client system 12. In this example, the message broker 10, first client system 11 and second client system 12 are connected via Internet links shown by arrows 13, 14 respectively. The first client system 11 comprises a publisher module, generally indicated at 15 which generates message information which is to be passed to the client system 12. The first client system is provided with a transmission module 16 to receive the message information from the publisher module 15 and forward it to the message broker 10 via the Internet link 13. The first client system 11 is also provided with a firewall 17, through which all communications between the client system 11 and the Internet pass and which in the present example is set to block incoming HTTP (HyperText Transfer Protocol) requests. In similar fashion, the second client system 12 comprises a subscriber module 18 operable to receive messages from the first client system 11. The second client system 12 is provided with a receiver module 19 operable to receive messages from the message broker 10 via the Internet connection 14, and a firewall 20 which is set to block all incoming HTTP requests. The subscriber module 18 receives instructions to send a message request from a call back module 21.

The first client system 11 and the second client system 12 in the present example comprise intranets of conventional type provided with access to the Internet through respective firewalls 17, 20, although it will be apparent that the client systems may comprise any appropriate system as desired.

The message broker 10 comprises a Web server with a multi-thread servlet engine 10a. The message broker 10 is provided with a first channel adapter, in this embodiment comprising a first channel adapter servlet 22, a second channel adapter, in this embodiment comprising a second channel adapter servlet 23 and a plurality of channels 24 each addressable by the first channel adapter servlet 22 and second channel adapter servlet 23. In the present example, the channel adapters 22, 23 are servlets which run within a thread allocated by the servlet engine 10a to process incoming HTTP requests. The servlets 22, 23 are operable to run appropriate to perform a "push" or "pull" operation to place messages in the channel 24 and withdraw messages from the channel 24 respectively.

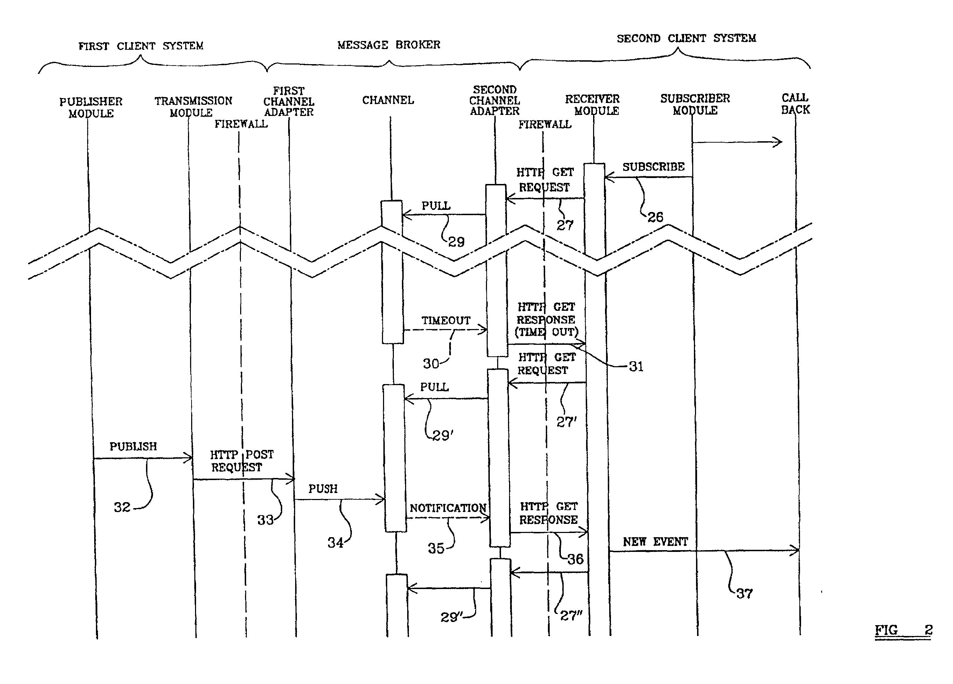

Referring now to Figures 1 and 2, the communication system works as follows. The subscriber module 18 is instructed to invoke the call back module 21 on occurrence of a new message. The subscriber module 18 sends a subscribe instruction 26 to the receiver module 19. The subscribe instruction 26 contain source information corresponding to a message channel to enable the message broker 21 to establish an appropriate communication link. The receiver module 19 generates a message request 27 in the form of an HTTP GET request, including the source information from the subscribe instruction 26. The HTTP GET request is transmitted via the Internet link 14 to the message broker 10. In conventional manner the message broker servlet engine 10a receives the HTTP request and runs the second channel adapter servlet as specified in the HTTP request. The servlet 23 then processes the HTTP request, by reading the GET request 27 to obtain the source information to identify the relevant channel. In the present example, the source information is simply a channel identification name or number.

Once a channel has been identified, in this case the channel 28, the second channel adapter servlet 23 performs a pull operation 29 to attempt to pull an event from the channel 28. Where no event is found, i.e. no message has been placed in channel 28, no response will be sent by the second channel adapter servlet 23 until, in the present example, a pre-determined period of time has elapsed. In the present example, since the pull request is performed by a servlet 23, if there is no information in the identified channel the thread running the servlet 23 will "sleep" until the standard time-out period elapses or notification of a message "push" is received. Once the predetermined time period has elapsed, the thread running the servlet 23 is woken up in conventional manner. The second channel adapter servlet 23 then sends a standard time-out response to the receiver module 20. In this example, the standard HTTP time-out error message will be sent, code 504, as the HTTP GET response 31. On receipt of the time-out response 31, the receiver module 19 then promptly retransmits a GET request 27', and the second channel adapter servlet 23 on receipt of the HTTP GET request 27' will once again attempt to pull a message from the channel 28. This cyclical process of the receiver module 20 transmission a GET request to the second channel adapter servlet 23, receiving a time out response 31 and re-transmitting a GET request 27 may continue indefinitely until a message is received.

To send a message via the message broker 10, the publisher module 15 of the first client system 11 will generate message information, including destination information and content information i.e. the body of the message, and forward this message as a publish instruction 32 to the transmission module 16. The transmission module 16 will generate a message 33 in the form of an HTTP POST request and transmit this information via the firewall 17 and the Internet link 13 to the message broker 10. The message 33 is received by the message broker servlet engine 10a which runs the first channel adapter servlet 22 as specified in the HTTP request. The servlet 22 then processes the HTTP request by reading the destination information and identifies the appropriate channel in which the message should be placed. In the present example, as for the GET request source information, the destination information is simply a channel identification name or number. If no such channel exists, the first channel adapter servlet 22 may dynamically create the channel, i.e. allocate the channel name to one of the plurality of channels 24. In this example, the channel 28 is identified and the servlet 22 performs a push operation 34 to place the message on the identified channel. The first channel adapter servlet 22 then sends a notification 35 is sent to any thread listening to that channel, in this example the second channel adapter servlet 23.

Referring to Figure 2, the push operation 34 has now placed the message in the channel 28 within the predetermined time-out period from the pull operation 29'. The second channel adapter servlet 23 receives the notification 35 and acts to pull the message from the channel 28. The second channel adapter servlet 23 then transmits a standard response to the HTTP GET request 36, including at least the content information of the message 32. In this example, the receiver module 20 then transmits a new event notification 37 to the call back module 21, including the message content information as part of the argument as part of the new event notification 37. In this example, the second receiver module 20 then transmits a new HTTP GET request 27", the second channel adapter servlet 23 then transmits a further pull request 29" and the cycle continues.

The communication system described is this particularly adaptable in allowing cross-platform operation and is scalable to any number of client systems 11, 12 as may be desired. The repeated GET request/GET response cycle thus enables a published message to be retrieved by the recipient in nearly real time, and the use of the HTTP protocol to transmit and retrieve messages enables the messages to pass through the respective firewalls 17, 20.

However, in the current HTTP protocol, a time out response is automatically provided. The time out response 30 might be advantageously regarded as a "heart beat" response, indicating the ongoing operation of the message broker 10.

In an alternative implementation, it might be envisaged that the functionality of the servlets 22, 23 could be implemented instead at socket level. A thread processing a HTTP PUT request will check whether there is a socket connection associated with the message channel. If yes, the message is simply be sent to the client system using the socket connection information, and then the socket connection is removed. If there is no socket connection, the message is stored in the message channel as discussed before. To retrieve a message, a thread processing an HTTP GET request checks the specified message channel. If a message is stored in the message channel, it is returned to the client system. Otherwise, the socket connection is stored as information associated with the message channel, and a time out specification placed in a time queue. If a message is pushed into the channel before time out occurs, the thread processing the HTTP PUT request simply sends the message to the client using the socket connection information as discussed above. In the event of a time out, the thread associated with the time out will wake up and retrieve the message channel identification name or number associated with the time out. If there is still socket connection information associated with the message channel, a time out response is sent to the client system using the socket connection and then the socket connection information is removed. If no socket connection information is associated with the message channel, this indicates that a message was sent to a client system in the interim. No action is then taken and the thread returns to the start of the process.

It will be clear that provisions may be made for example for security by using secure HTTP (HTTPS), message persistent storage and acknowledgement protocols as desired.

It will be apparent that a message to be transmitted by the message broker 10, both the first client system 11 and the second client system 12 must know the channel identification name or number of the appropriate message channel. For secure communication, it will also be apparent that the channel identification name or number must not be known to any third party. The channel identification name or number may be established between the first client system 11 and the second client system 12 by any means as desired For example, the second client system 12 may transmit a request to the message broker 10 for a channel for communication with the first client system 11. The message broker 10 may then allocate a channel and transmit an appropriate channel identification name or number via a secure connection to the first client system 11 and second client system 12. Alternatively, where there is some other communication link between the first client system 11 and second client system 12, the first client system 11 may simply transmit the channel identification name or number to the second client system 12. As discussed hereinbefore, if a first client system posts a message to the message broker 10, if a channel with the channel identification name or number does not exist, it will be created automatically, and the other client system 12 is then able to send a GET request including the channel identification name or number. It might also be envisaged that the message broker could comprise an address information store 25 which could contain address information, for example the addresses of the client systems 11, 12 and corresponding channel identification information if required.

In a second embodiment of the invention, a message broker may be used to establish bi-directional communications as shown in Figure 3. Two channels, 28', 28" are allocated to establish a two-way communication link between a first client system 11' and a second client system 12'. In this example, the first client system 11' and second client system 12' are provided with publisher/subscriber modules 15', 18' which perform the functions of both modules 15 and 18 as set out above. Similarly, the client systems 11', 12' comprise transmission/receiver modules 16', 19' which have the functionality of both modules 16 and 19 as described above. A message broker 10' is provided with a first combined channel adapter 40 and a second combined adapter 41. The first combined channel adapter 40 comprises a first adapter element 22' operable to push messages onto channel 28' in the same manner as the first channel adapter servlet 22, and a second adapter element 23' operable to pull messages from channel 28" in the same manner as the second channel adapter servlet 23 described above. Similarly, the second combined channel adapter module 41 comprises a first adapter element 22" adapted to push messages onto channel 28" in like manner to the first channel adapter servlet 22 described above, and a second adapter element 23" operable to pull messages from channel 28' in the same manner of the second channel adapter servlet 23 described above. Using such an arrangement, each client system 11', 12' is operable both to transmit and receive messages via the message broker 10' using the method as described above in relation to Figure 1. Because the system of Figure 3 can be made transparent, it will be apparent that any suitable communication protocol may be used by the client systems 11', 12'.

It will be clear that such a communication system will have many potential applications. Two example applications will now be described, although it will be apparent that the potential applications are not limited to these two examples.

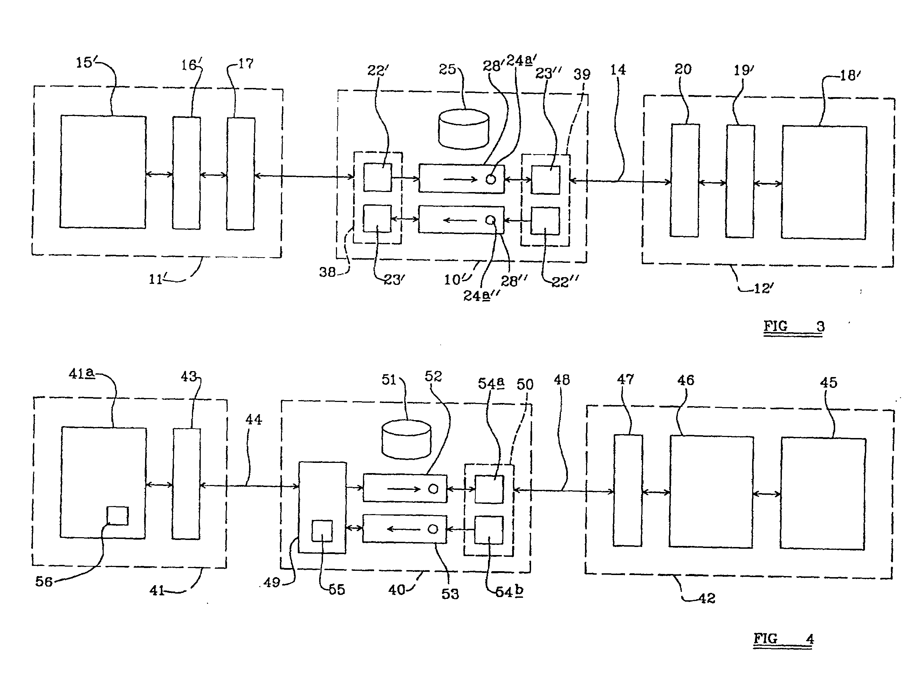

With reference to Figure 4, it is often desirable for information located on an intranet to be available from outside the intranet, for example over the Internet. One method of doing this is to have a duplicate web server outside the intranet firewall which is provided with a portion of the information from the intranet server to which public access is desired. Alternatively, it is possible to provide authentication or password protection on the intranet server to allow access to the intranet through the firewall. A message broker according to the present invention can be used to provide secure access to an intranet without resorting to either of these provisions.

Referring to Figure 4, a message broker is indicated at 40 and is similar in operation to the message broker of Figures 1 to 3. A first client system is shown at 41 and a second client system at 42. In this example, the first client system 41 comprises a computer provided with a browser 41a of conventional type which connects via a firewall 43 and an Internet connection 44 to the message broker 40. The second client system 42 comprises an intranet web server 45, and an HTTP server adapter 46 operable to address the intranet web server 45, and also to connect via a firewall 47 and Internet connection 48 to the message broker 40.

The message broker 40 comprises an HTTP client adapter 49 and a server channel adapter 50. An address information store 51 is also provided. Two channels are allocated by the message broker 40 to form a link between the first client system 41 and a second client system 42. A first, permanent, channel 52 is operable to receive messages from the HTTP client adapter as discussed hereinbefore The message broker 40 also allocates a second, temporary channel 53 to receive messages from the server channel adapter 50. The server channel adapter 50 comprises a first adapter element 54a, operable to pull messages from a channel 52 in like manner to the second adapter module 23 described hereinbefore. The server channel adapter 50 comprises a second adapter element 54b operable to push messages onto the channel 53 in like manner to the first adapter module 22 described hereinbefore. The HTTP client adapter 49 is operable to push messages onto the permanent channel 52, and pull messages from the temporary channel 53. The client adapter 49 is also provided with an authentication element 55.

The system works as follows. A HTTP GET request is generated in conventional manner by the browser 41a and transmitted via the firewall 43 and Internet connection 44 to the message broker 40, where it is processed by the HTTP client adapter 49. The HTTP GET request may comprise a URL in conventional manner. Alternatively, where the information is available on the first client system 41 it may comprise additional destination information, such as the host name and port number of the destination intranet web server, or channel information. Such information may be stored in a cookie 56 on the first client system 41, or may be retrieved from the address information store 51. The HTTP GET request from the browser 41a is of course permitted to pass via the firewall 43 in conventional manner.

The HTTP client adapter 49 encapsulates the client request in HTTP form with the destination host name and port number added in the message header.

The message is pushed into permanent channel 52. The HTTP server adapter 46 and the first adapter element 54a of the server adapter are continually monitoring the permanent channel 52 in like manner to the second channel adapter 23 of Figure 1. Thus, when a message is pushed into the permanent channel 52, it is retrieved and transmitted to the HTTP server adapter 46 through the firewall 47. The HTTP server adapter 46 extracts the HTTP client request and the destination host name and port number and sends the HTTP request to the intranet web server identified by the host name and port number.

The intranet web server 45 returns a standard HTTP GET response to the HTTP server adapter 46. The host name and port number of the intranet web server are replaced by the host name and port number of the message broker. The response is transmitted via the firewall 47 and Internet connection 48 to the message broker 40. The second adapter element 54 pushes the response into temporary channel 53. The HTTP client adapter 49 pulls the message from the temporary channel 53 and retrieves the HTTP response. The HTTP response is parsed and changed such that the intranet web server address found in the absolute URL is substituted by a corresponding message broker URL, and then sent via the Internet connection 44 and firewall 43 to the browser 41a in a conventional manner. The message broker domain is stored as a cookie 56 in the browser 41a for future use.

The request and response transmitted via the Internet link 48 may be encrypted or secured by appropriate means as desired, in the present example using secure socket layer (SSL) protocol. The message broker 40 can provide authentication and authorisation before the request is transmitted to the intranet web server 45, and so provide secure access to the intranet server 45 through the firewall 47.

Once the response has been pulled from the temporary channel 53 by the HTTP client adapter 49, the message broker 40 reallocates the temporary channel 53, making it available for other messages.

The HTTP client adapter 49 has similar functionality to the combined adapter module 38, but with the additional functions of encapsulating the HTTP client request and providing authentication and authorisation. The browser 42 may be enabled to access the Intranet web server by provision of an appropriate cookie which provides the necessary information to the HTTP client adapter 49, for example as part of the cookie 56. The cookie could be electronically signed by the provider of the intranet web server 45 such that the user of the browser 42 is happy to install the cookie 56 on his computer.

It will be apparent that although the message broker 40 has been described in terms of the system of Figures 1 to 3, such remote access to an intranet could be performed using any appropriate message broker system operable to receive an HTTP request from a first client system and forward the request in response to an HTTP request received from the second client system.

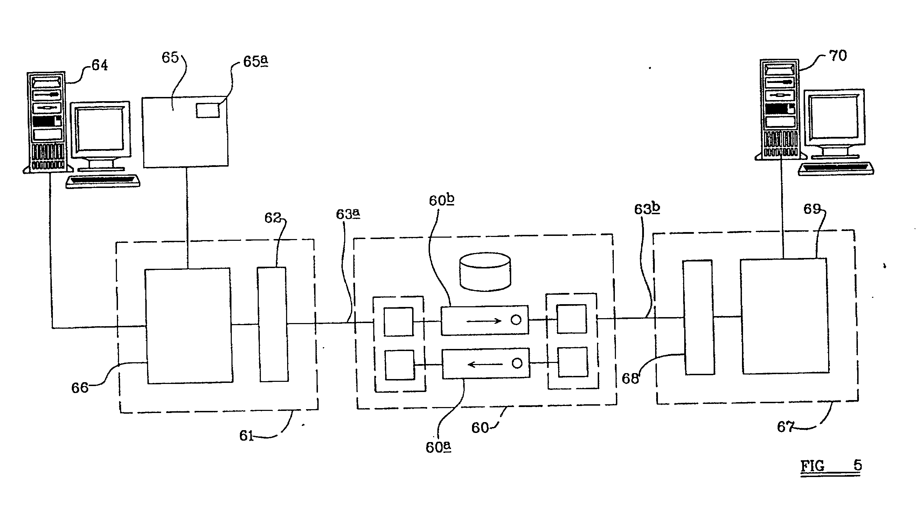

A application of a message broker embodying the present invention is shown in Figure 5, and relates to remote control of a device via the Internet using a message broker. A suitable configuration is shown in Figure 5. A message broker system 60 is shown which operates in the same manner as the message broker 10' of Figure 3. In this example, a first client system 61 is shown which comprises an appropriate network server comprising a firewall 62 and an Internet connection 63a, At least one PC 64 and a printer 65 are connected to the first client system 61. The first client system 61 is also provided with a device communication mobile comprising a remote diagnostic support tool (RDST) 66. The remote diagnostic support tool 66 is operable to communicate with the printer 65, in the present example using a standard peripheral meta language (PML).

The second client system 67 comprises a remote system which requires access to the printer 65, for example a technical support agency. The second client system 67 comprises a firewall 68, a remote control module 69 and an Internet connection 63b. At least one PC 70 is connected to the second client system 67.

The printer 65 is provided in this example with a control panel 65a of conventional type. Using the control panel 65a, a user is able to check and vary the printer configuration. The control panel 65a is also addressable by the remote diagnostic support tool 66 using PML.

When is desired to provide the second client system 67 with remote access to the printer 65, the remote diagnostic support tool 66 is enabled from the PC 64 to address the printer 65 and to establish a link over the Internet connection 63. The message broker 60 establishes a bi-directional communication channel comprising message channels 60a, 60b, as described hereinbefore in relation to Figure 3. The PC 70 sends a device instruction to the remote control module 69. The remote control module generates a message encoded as an HTTP instruction comprising the device instruction, destination information identifying the message channel 60a and also device identification information as required. The remote control device 69 then sends the message through the firewall 68, and message broker 60 to the remote diagnostic support tool 66. The remote diagnostic support tool 66 transmits the device instruction to the printer 65. The printer 65 may return device information, in this example the printer make, serial number, and configuration. The RDST 66 then encodes the device information as an HTTP POST request, including destination information corresponding to the message channel 60b, and transmits this instruction to the remote control tool 69 via the message broker 60. This printer information is then transferred to the PC 70. It might be envisaged that the printer information be displayed as a simulated control panel, for example, an display 71. The operator of the PC 70 is then able to transmit further appropriate device instructions, for example to reconfigure the printer or transmit appropriate software update via the remote control 69 and remote diagnostic support tool 66 to the printer 65. The updated printer configuration can then be retrieved by the remote diagnostic support tool 66 and retransmitted to the remote control 69 as before. It might also be envisaged that, for example, updated driver software might be sent to the PC 64. Once the session has ended, the connections 63a, 63b to the message broker 60 are dropped. Such an arrangement permits nearly real time remote control of the printer 65 via the Internet.

It will be apparent that this configuration may be used to provide remote control of any appropriate device via the Internet, and not necessarily merely a printer.

It will be apparent that appropriate authentication and security may be provided at any relevant point of the system. A basic security feature is that the user of the PC 64 must enable the remote diagnostic support tool 66 to open a communication channel before the second client system 67 can obtain remote access to the printer 65. It might be envisaged that the messages transmitted by the second client system 67 are electronically signed or provided with an electronic certificate to confirm their authenticity.

Where the first client system 61 is connected to a plurality of printers, the relevant printer may be identified by any appropriate device identification means, for example its IP address, the domain name server name or a network address as appropriate.

Any device which supports PML may be controlled in such a manner, not merely printers.

It will be apparent that this application may be used with any appropriate message forwarding system as desired, and not necessarily simply with a message broker 60 as described herein. All the messages may be encrypted using secure socket layer protocol. The remote control is provided without requiring the setting up of a phone/modem connection, or by requiring the support agency in this example to give telephone instructions to the user on how to configure a printer and ask for feedback.

It will be apparent that the invention described herein may be implemented in any desired manner, whether in hardware, software or otherwise. Apparently, the invention may be implemented on conventional hardware provided with appropriate software according to the present invention.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A message broker for transmitting message from a first client system to a second client system, the message broker comprising at least one message channel, a first channel adapter and a second channel adapter,
the first channel adapter being operable to;
receive a message from the first client system encoded in an Internet protocol and comprising content information and destination information,
read the destination information from the message, and send a push request to place the message in a message channel corresponding to the destination information,
the second channel adapter being operable to;
receive a message request from the second client system encoded in an Internet protocol and comprising source information
read the message request and identify a message channel corresponding to the source information,
send a pull request to the message channel, and
generate a response accordingly.

2. A message broker according to claim 1 wherein the second channel adapter is operable to generate a response comprising a time out response if no message is placed in the channel within a predetermined time period.

3. A message broker according to claim 1 or claim 2 wherein, when a message is placed in the channel, the second channel adapter is operable to generate a response comprising at least the content information.

4. A message broker according to any one of the preceding claims wherein the second channel adapter is operable to generate a response encoded in an Internet protocol format.

5. A message broker according to any one of the preceding claims wherein the first channel adapter and the second channel adapter are each implemented by a servlet.

6. A message broker according to any one of the preceding claims comprising an address information store wherein channel information corresponding to at least one of the destination information and source information is stored.

7. A message broker according to any one of the preceding claims comprising a bi-directional communication link, the message broker comprising two message channels, each channel comprising a first channel adapter and a second channel adapter, such that the message broker is operable to transmit messages from the first client to the second client system using one of the channels and from the second client system to the first client system using the other of said channels.

8. A message broker according to claim 7 wherein the first channel adapter of one of the channels and the second channel adapter of the other of the channels are provided by a common combined channel adapter module.

9. A message broker according to any one of the preceding claims wherein the message and the request are encoded in HTTP format.

10. A message broker according to claim 9 wherein the message comprises a HTTP POST request.

11. A message broker according to claim 9 or 10 wherein the message request comprises a HTTP GET request.

12. A transmission module operable to transmit a message from a first client system to a message broker for receipt by a second client system, the transmission module being operable to
receive message information comprising content information and destination information corresponding to a message channel,
generate a message comprising the message information encoded in an Internet protocol format, and
transmit the message to a message broker for retrieval by the second client system from the message channel

13. A transmission module according to claim 12 wherein the message is encoded in HTTP format and transmitted to the message broker using a HTTP POST request.

14. A client system provided with a transmission module according to claim 12 or claim 13 and a firewall, wherein the message is permitted to pass the firewall.

15. A receiver module for a second client system, operable to retrieve a message comprising content information from a message broker sent by a first client system, the receiving module being operable to;
receive a message request comprising source information corresponding to a message channel
generate a message request encoded in an Internet protocol format in accordance with the source information,
transmit the message request to the message broker,
receive a response from said message broker in accordance with the message request, and
generate an output.

16. A receiver module according to claim 15 wherein, where the response comprises a time out response, the receiver module is operable to generate an output comprising re-transmitting the message request to the message broker.

17. A receiver module according to claim 15 or claim 16, wherein where the response comprises a message, the receiver module is operable to generate an output comprising the content information.

18. A client system comprising a receiver module according to any one of claims 15 to 17 and a firewall, wherein the message request and the response are permitted to pass the firewall.

19. A client system according to claim 18 wherein the message request and response are encoded using HTTP format and wherein the message request comprises an HTTP GET request.

20. A communication system comprising a message broker according to any one of claims 1 to 8 and at least one of a client system according to claim 13 or claim 14 and a client system according to claim 18 or claim 19.

21. A message system according to claim 20 wherein the message broker and at least one client system are connected via the Internet.

22. A method of transmitting messages from a first client system to a second client system comprising the steps of
receiving a message from the first client system encoded in an Internet protocol format and comprising content information and destination information corresponding to a message channel,
reading the destination information,
sending a push request to place the information in a message channel corresponding to the destination information, receiving a message request from the second client system encoded in an Internet protocol format and comprising source information corresponding to the message channel,
reading the message request to identify the message channel corresponding to the source information,
sending a pull request to the message channel, and
generating a response accordingly.

23. A method of transmitting a message from a first client system to a message broker for retrieval by to a second client system comprising the steps of;
receiving message information comprising destination information corresponding to a message channel and content information,
generating a message comprising the content information and destination information encoded in an Internet protocol format, and
transmitting said message to a message broker.

24. A method of monitoring a message broker for a received message for a second client system from a first client system comprising the steps of;
receiving a request comprising source information corresponding to a message channel,
generating a message request encoded in an Internet protocol format in accordance with the source information,
transmitting said message request,
receiving a response from the message broker in accordance with the request, and
generating an output in accordance with the response.
